# EUROPEAN PATENT SPECIFICATION

(11) **EP 2 688 342 B1**
(45) Date of publication and mention of the grant of the patent: **21.02.2018**
(21) Application number: 12177114.1
(22) Date of filing: 19.07.2012
(51) Int. Cl.: H04W 40/24, H04W 40/30

(54) **Soft Topology Reconfiguration for Improved Robustness in a Mesh Network**
Soft Topology Rekonfiguration mit verbesserter Robustheit in einem Maschennetzwerk
Reconfiguration topologique souple permettant d'améliorer la robustesse dans un réseau maillé

(43) Date of publication of application: 22.01.2014
(73) Proprietor: TerraNet AB, 223 63 Lund (SE)
(72) Inventor: Petersen, Johan, 216 18 Malmö (SE); Al Jaberi, Monthadar, 217 65 Malmö (SE); Floberg, Henrik, 226 49 Lund (SE)
(74) Representative: Ström & Gulliksson AB

(56) References cited:
- US-A1- 2006 098 608
- US-A1- 2006 126 514
- TOBY XU ET AL: "Streaming in MANET: Proactive Link Protection and Receiver-Oriented Adaptation", PERFORMANCE, COMPUTING, AND COMMUNICATIONS CONFERENCE, 2007. IPCCC 200 7. IEEE INTERNATIONA, IEEE, PI, 1 April 2007 (2007-04-01), pages 178-185, XP031086871, ISBN: 978-1-4244-1137-5
- BYOUNGHEON SHIN ET AL: "Dynamic Link Quality Aware Routing Protocol for Multi-radio Wireless Mesh Networks", ADVANCED INFORMATION NETWORKING AND APPLICATIONS (AINA), 2012 IEEE 26TH INTERNATIONAL CONFERENCE ON, IEEE, 26 March 2012 (2012-03-26), pages 44-50, XP032169474, DOI: 10.1109/AINA.2012.67 ISBN: 978-1-4673-0714-7

## Description

### TECHNICAL FIELD

This application relates to a method, a computer-readable medium and a network device for improved data communication networking capabilities, and in particular to a method, a computer-readable medium and a network device for improved mesh networking capabilities during topology reconfiguration.

### BACKGROUND

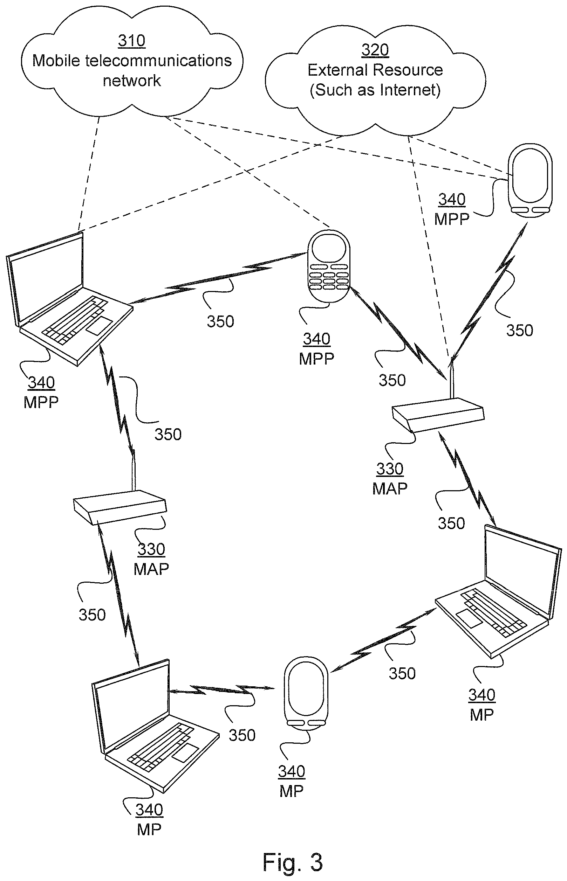

Mesh networks are data communication networks built up of nodes that are arranged to communicate with each other for example according to the Institute of Electrical and Electronics Engineers standard IEEE 802.11s. In a mesh network each node is configured to capture and disseminate data that is aimed for the specific node. Each node is also configured to serve as a relay for other nodes, that is, the node must collaborate to propagate data in the network. The mesh access points are configured to serve as relays and routers for the other nodes. The nodes are configured to connect to one another through links that are mapped to form paths between any two nodes in the mesh network. To ensure that all paths are available, a routing network must allow for continuous connections and reconfiguration around broken or blocked paths, using self-healing algorithms. More information on mesh networks are given in the detailed description with reference to figure 3.

In contemporary mesh networks the self-healing algorithms are implemented to re-establish a path between affected nodes when it is determined that a link has been broken. The detection that the link is broken is performed periodically (default 5 seconds) when a node discovers that a neighboring node is no longer sending out an identifying beacon. The node then performs a rerouting operation. The disadvantage of this is that during the time from the link is broken to a new route has been established no data traffic between affected nodes is possible. For time critical applications, such as Voice over IP, this means that the conversation goes silent for some time (default 5 seconds). This is of course unacceptable to most users wishing to conduct voice calls.

The patent application published as US2006098608 discloses a system and method for decreasing the route convergence time in a wireless communication network, such as a wireless ad-hoc peer-to-peer network, by finding an alternate route if the nodes anticipate weakening or breakage of a route currently in use. The system and method which enables reactive routing protocols to find optimal routes between nodes in these types of networks when those routes cannot otherwise be found in certain conditions. The system and method thus decrease the route convergence time, provide an effective and efficient way to find optimal routes, and improve overall performance of the network with regard to throughput, delay, packet completion rate and other factors.

There is thus a need for a method and a network device that ensure that long delays or dropped communication channels are avoided.

### SUMMARY

The invention is defined by a method and device for use in a mesh network according to independent claims 1 and 12 and a computer readable storage medium comprising instructions for performing the method of claim 12 according to independent claim 13.

Further embodiments are defined by the dependent claims.

The following examples are useful for understanding the invention. It is an object of the teachings of this application to overcome the problems listed above by providing a network device comprising a memory, an interface and a controller for use in a mesh network comprising at least one second network device and at least one another or alternative network device, wherein said network device is configured to be connected to said second network device, wherein said controller is configured to receive a communication from a second network device or another or alternative network device through said interface, monitor a signal strength that said communication was received at, and determine whether said connection is to be replaced based on said monitored signal strength and, if so, cause said connection to be replaced.

It is also an object of the teachings of this application to overcome the problems listed above by providing a method for use in a mesh network comprising at least one first network device, at least one second network device and at least one another or alternative network device, wherein said first network device is configured to be connected to said second network device, said method comprising said first network device receiving a communication from a second network device or another or alternative network device through an interface, said first network device monitoring a signal strength that said communication was received at, and said first network device determining whether said connection is to be replaced based on said monitored signal strength and, if so, causing said connection to be replaced.

It is also an object of the teachings of this application to overcome the problems listed above by providing a computer readable storage medium encoded with instructions that, when executed on a processor, performs the method according to above.

The inventors of the present invention have realized, after inventive and insightful reasoning, that by measuring or monitoring the signal strengths at which communications are received a proactive management of connections or links is enabled which helps prevent that long delays are caused by a broken or low quality connection. This is furthermore achieved without wasting network resources, such as bandwidth and power, by flooding the system with broadcasts to establish new connections which broadcasts are made redundant by the teachings herein. The teachings herein find use in routed mesh networks. The teachings herein also find use in routed mesh networks operating according to the IEEE 802.11s standard.

Other features and advantages of the disclosed embodiments will appear from the following detailed disclosure, from the attached dependent claims as well as from the drawings.

Generally, all terms used in the claims are to be interpreted according to their ordinary meaning in the technical field, unless explicitly defined otherwise herein.

All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF DRAWINGS

The invention will be described in further detail under reference to the accompanying drawings in which:
Figure 1 is a schematic view of a network device according to an embodiment of the teachings herein;
Figure 2 is a schematic view of the components of a network device according to an embodiment of the teachings herein;
Figure 3 is a schematic view of a general view of a data communications network according to an embodiment of the teachings herein;
Figure 4 is a schematic view of the components of a network device, such as an access point, according to an embodiment of the teachings herein;
Figure 5 is a schematic view of a computer-readable storage medium according to an embodiment of the teachings herein;
Figure 6 is a flowchart of a general method according to an embodiment of the teachings herein; and
Figures 7A, 7B and 7C each shows an example of an example data communications network according to an embodiment of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

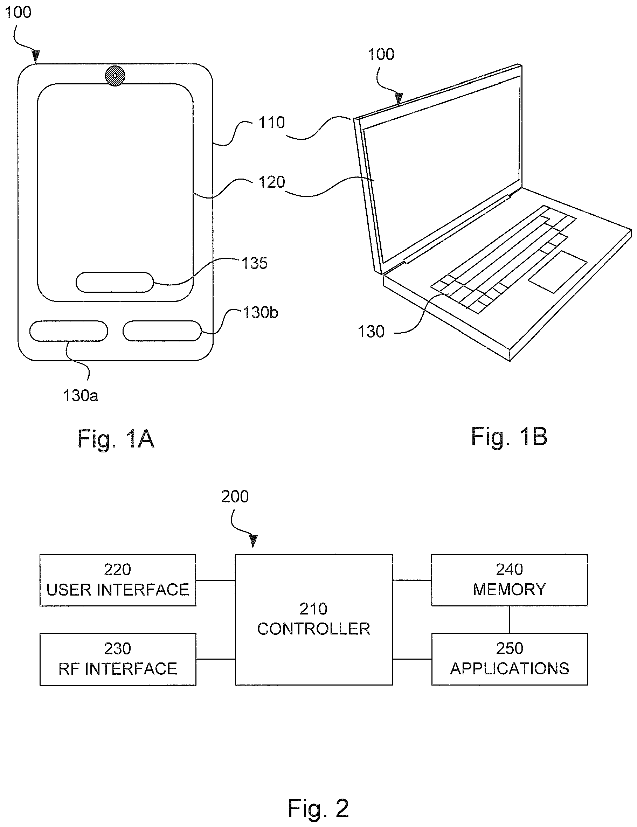

Figures 1A and 1B generally show a network device 100 according to an embodiment herein. In one embodiment the network device 100 is configured for network communication, either wireless or wired, for acting as a node in a mesh network. An example of a mesh network will be described with reference to figure 3. Examples of such a network device 100 are: a personal computer, desktop or laptop, an internet tablet, a mobile telephone, a smart phone and a personal digital assistant.

Two embodiments will be exemplified and described as being a smartphone in figure 1A and a laptop computer 100 in figure 1B.

Referring to figure 1A a smartphone 100 comprises a housing 110 in which a display 120 is arranged. In one embodiment the display 120 is a touch display. In other embodiments the display 120 is a non-touch display. Furthermore, the smartphone 100 comprises two keys 130a, 130b. In this embodiment there are two keys 130, but any number of keys is possible and depends on the design of the smartphone 100. In one embodiment the smartphone 100 is configured to display and operate a virtual key 135 on the touch display 120. It should be noted that the number of virtual keys 135 are dependant on the design of the smartphone 100 and an application that is executed on the smartphone 100.

Referring to figure 1B a laptop computer 100 comprises a display 120 and a housing 110. The housing comprises a controller or CPU (not shown) and one or more computer-readable storage mediums (not shown), such as storage units and internal memory. Examples of storage units are disk drives or hard drives. The network device 100 further comprises at least one data port. Data ports can be wired and/or wireless. Examples of data ports are USB (Universal Serial Bus) ports, Ethernet ports or WiFi (according to IEEE standard 802.11) ports. Data ports are configured to enable a network device 100 to connect with other network devices or a server.

The network device 100 further comprises at least one input unit such as a keyboard 130. Other examples of input units are computer mouse, touch pads, touch screens or joysticks to name a few.

Figure 2 shows a schematic view of the general structure of a network device according to figure 1. The network device 100 comprises a controller 210 which is responsible for the overall operation of the network device 200 and is preferably implemented by any commercially available CPU ("Central Processing Unit"), DSP ("Digital Signal Processor") or any other electronic programmable logic device. The controller 210 may be implemented using instructions that enable hardware functionality, for example, by using executable computer program instructions in a general-purpose or special-purpose processor that may be stored on a computer readable storage medium (disk, memory etc) 240 to be executed by such a processor. The controller 210 is configured to read instructions from the memory 240 and execute these instructions to control the operation of the network device 100. The memory 240 may be implemented using any commonly known technology for computer-readable memories such as ROM, RAM, SRAM, DRAM, CMOS, FLASH, DDR, SDRAM or some other memory technology. The memory 240 is used for various purposes by the controller 210, one of them being for storing application data and program instructions 250 for various software modules in the network device 200. The software modules include a real-time operating system, drivers for a user interface, an application handler as well as various applications 250. The applications are sets of instructions that when executed by the controller 210 control the operation of the network device 200. The applications 250 can include a messaging application such as electronic mail, a browsing application, a media player application, as well as various other applications 250, such as applications for voice calling, video calling, document reading and/or document editing, an instant messaging application, a calendar application, a control panel application, one or more video games, a notepad application, Short Message Service applications, location finding applications, electronic mailing and internet browsing applications.

The network device 200 may further comprise a user interface 220, which in the network device of figures 1A and 1B is comprised of the display 120 and the keys 130, 135.

The network device 200 further comprises a radio frequency interface 230, which is adapted to allow the network device to communicate with other devices via a radio frequency band through the use of different radio frequency technologies. Examples of such technologies are IEEE 802.11, IEEE 802.11s and Bluetooth® to name a few. Other examples of radio technologies for example for communicating with devices outside the mesh network that may be implemented in a network device 100 are W-CDMA, GSM, UTRAN, LTE, NMT to name a few.

Figure 3 shows a data communication network arranged as a mesh network 300. A mesh network comprises a plurality of nodes 340 and possibly at least one access point 330, referred to as a Mesh Access Point (MAP). A network without any access points 330 is called an ad hoc network. A MAP 330 is also referred to as a node. In a mesh network 300 each node 330, 340 is configured to capture and disseminate data that is aimed for the specific node. Each node 330, 340 is also configured to serve as a relay for other nodes 340, that is, the node 340 must collaborate to propagate data in the network 300. The mesh access points 330 are configured to serve as relays and routers for the other nodes 340. The nodes 330, 340 are configured to connect to one another through links or connections 350.

The network shown in figure 3 is a wireless data communication network and the nodes 340 and the access points 330 (if any) are configured to establish the wireless links 350 for communicating with one another.

In this example, the mesh network is arranged to operate according to the IEEE 802.11s standard. There are three types of nodes 330, 340 in such a mesh network, namely Mesh Points (MP), Mesh Portal (MPP) and Mesh Access Points (MAP).

An MP is often a laptop, smartphone or other wireless device, such as has been disclosed in the above with reference to figures 1A and 1B, and supports a peer protocol for discovering neighboring nodes and maintaining an overview of them. In IEEE 802.11s this peer protocol is called Peer Link Management protocol.

The discovery process is implemented so that a node transmits a beacon. A beacon is a data package that is transmitted periodically and carries information identifying the node transmitting it. Other data carried in the beacon includes Path Selection Protocol ID, Path Selection metric, Congestion Control Mode, Synchronization Protocol ID, Authentication Protocol ID, Mesh Formation Info and Mesh Capability. Nodes 330, 340 in a mesh network receive this information and each node 330, 340 is thus aware of its surrounding network environment.

The MPs also support a protocol for communicating with other nodes, nodes that are not necessarily neighbors to the MP. In IEEE 802.11s this peer protocol is called Hybrid Wireless Mesh Protocol (HWMP). It is hybrid because it supports two kinds of path selection protocols. In IEEE 802.11s the protocols use the MAC addresses for addressing a data package correctly. Each node 330, 340 is configured to find a path from one node 330, 340 to another node 330, 340. This is referred to as path selection.

An MPP is configured to provide gateway functionality to the mesh network. The MPP may for example be a portal to the internet 320 or a communication network 310, such as a mobile telecommunications network. An MPP must thus be configured to bridge at least two interface protocols. An MPP is often a laptop, a cell phone or other wireless device.

A MAP is an access point that is configured to also communicate according to the mesh network standard and to operate as an access point.

In the mesh network 300 of figure 3 there are eight nodes 330, 340 whereof three are laptops, three are smartphones and two are routers. Two nodes are MAPs, three nodes are MPs and at least two nodes are MPPs. It should be noted that a node may have the capability to act as both an MP and an MPP. For example, the MPs of the example mesh network of figure 3 may actually also be MPPs. For clarity issues, only three nodes are illustrated as having internet capability and three as having capabilities for mobile telecommunication.

A mesh network can be designed using a flooding technique or a routing technique. When using a routing technique, a message propagates from a sending node 340 to receiving node 340 along a path, by hopping from node 340 to node 340 until the receiving node 340 is reached. To ensure that all paths are available, a routing network must allow for continuous connections and reconfiguration around broken or blocked paths, using self-healing algorithms. According to the standard IEEE 802.11s should a path be broken this will be discovered after a time period (5 s) when a sending node detects that reception is not acknowledged. The system then performs a rerouting procedure by sending out path requests (PREQ).

The self-healing capability enables a routing based network to operate when one node breaks down or a connection goes bad. As a result, the network is typically quite reliable, as there is often more than one path between a source and a destination in the network. Although mostly used in wireless scenarios, this concept is also applicable to wired networks and software interaction.

A wireless mesh network (WMN) is a communications network made up of radio nodes (laptops, cell phones and other wireless devices) while the mesh routers forward traffic to and from the gateways which may but need not connect to the Internet. The coverage area of the radio nodes working as a single network is sometimes called a mesh cloud. Access to this mesh cloud is dependent on the radio nodes working in harmony with each other to create a radio network. A mesh network is reliable and offers redundancy. When one node can no longer operate, the rest of the nodes can still communicate with each other, directly or through one or more intermediate nodes. Wireless mesh networks can be implemented with various wireless technology including 802.11, 802.15, 802.16, cellular technologies or combinations of more than one type.

A wireless mesh network often has a more planned configuration, and may be deployed to provide dynamic and cost effective connectivity over a certain geographic area. An ad-hoc network, on the other hand, is formed ad hoc when wireless devices come within communication range of each other. The MAPs may be mobile, and be moved according to specific demands arising in the network. Often the MAPs are not limited in terms of resources compared to other nodes in the network and thus can be exploited to perform more resource intensive functions. In this way, the wireless mesh network differs from an ad-hoc network, since these nodes are often constrained by resources.

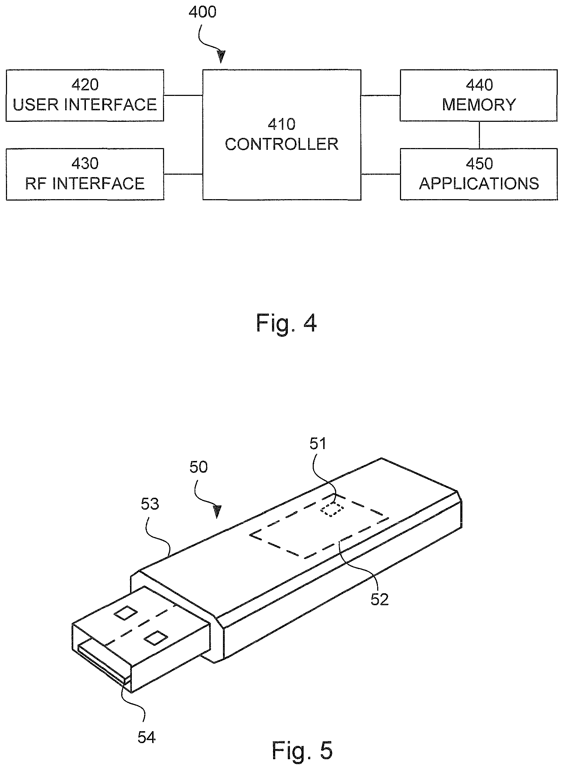

Figure 4 illustrates an example of a network device being an access point 400, such as an access point 330 in figure 3. Examples of such an access point 400 are a WiFi hub and a router. The access point 400 comprises a controller 410 which is responsible for the overall operation of the access point 400 and is preferably implemented by any commercially available CPU ("Central Processing Unit"), DSP ("Digital Signal Processor") or any other electronic programmable logic device. The controller 410 may be implemented using instructions that enable hardware functionality, for example, by using executable computer program instructions in a general-purpose or special-purpose processor that may be stored on a computer readable storage medium (disk, memory etc) 440 to be executed by such a processor. The controller 410 is configured to read instructions from the memory 440 and execute these instructions to control the operation of the access point 400. The memory 440 may be implemented using any commonly known technology for computer-readable memories such as ROM, RAM, SRAM, DRAM, CMOS, FLASH, DDR, EEPROM memory, flash memory, hard drive, optical storage or any combination thereof. The access point 400 further comprises one or more applications 450. The applications are sets of instructions that when executed by the controller 410 control the operation of the access point 400. The memory 440 is used for various purposes by the controller 410, one of them being for storing applications data and program instructions in the access point 400. The software includes a real-time operating system, an application handler as well as various applications 450.

Alternatively, the access point 400 comprises drivers for a user interface 420. As is commonly known, a user may operate the access point 400 through the user interface 420. In one embodiment such a user interface may comprise an on/off button and a reset key (not shown).

The access point 400 further comprises an interface 430, which is adapted to allow the access point 400 to communicate with other network devices and also other devices through for example a radio frequency band through the use of different radio frequency technologies. Examples of such technologies are W-CDMA, GSM, UTRAN, LTE, and NMT to name a few. Other examples of such technologies are IEEE 802.11, IEEE 802.11s and Bluetooth®.

Optionally the access point 400 comprises a wired interface. An example of such wired interfaces is the Ethernet connection as standardized in IEEE 802.3.

The access point 400 may thus be capable of communication through more than one communication standard.

Figure 5 shows a schematic view of a computer-readable medium as described in the above. The computer-readable medium 50 is in this embodiment a memory stick, such as a Universal Serial Bus (USB) stick. The USB stick 50 comprises a housing 53 having an interface, such as a connector 54, and a memory chip 52. The memory chip 52 is a flash memory, that is, a non-volatile data storage that can be electrically erased and re-programmed. The memory chip 52 is programmed with instructions 51 that when loaded (possibly via the interface 54) into a controller, such as a processor, executes a method or procedure according to the embodiments disclosed above. The USB stick is arranged to be connected to and read by a reading device, such as a network device 100, 200 according to figures 1 and 2, for loading the instructions into the controller (210). It should be noted that a computer-readable medium can also be other mediums such as compact discs, digital video discs, hard drives or other memory technologies commonly used. The instructions can also be downloaded from the computer-readable medium via a wireless interface to be loaded into the controller.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

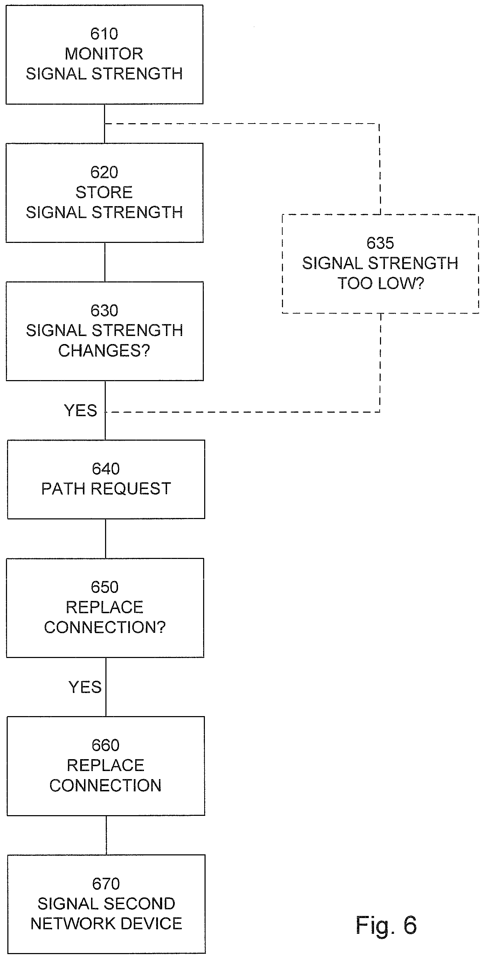

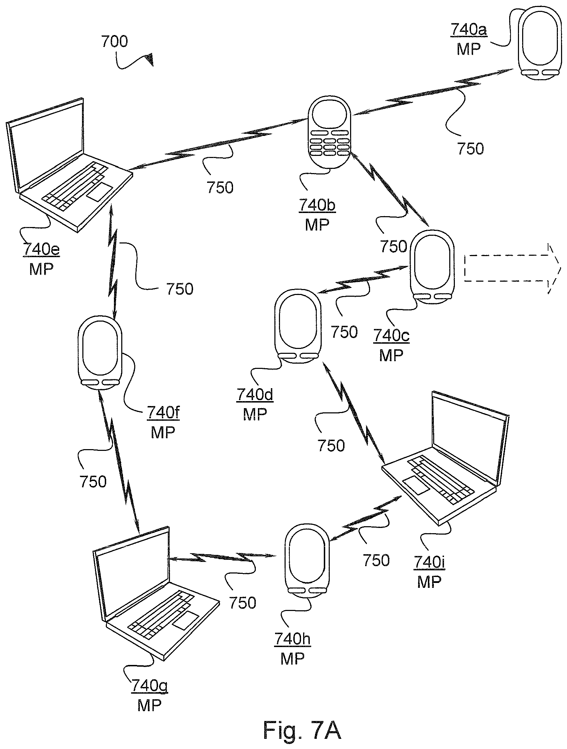

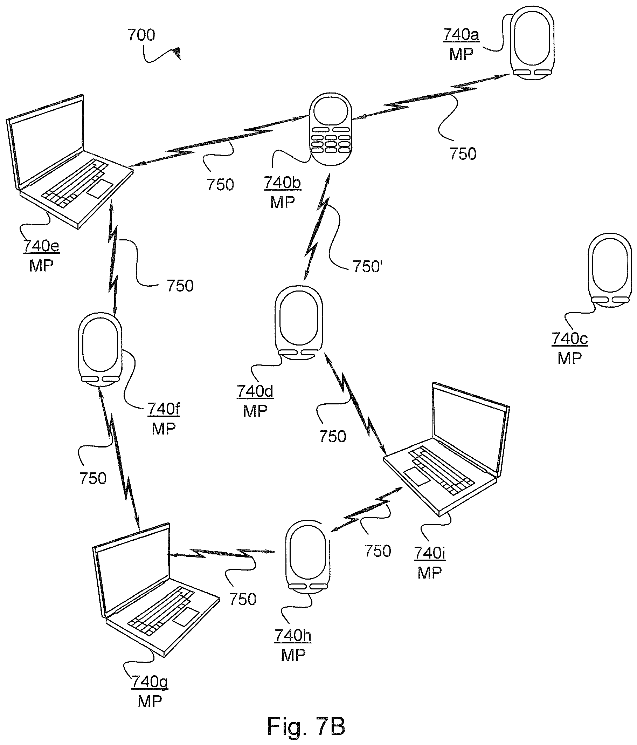

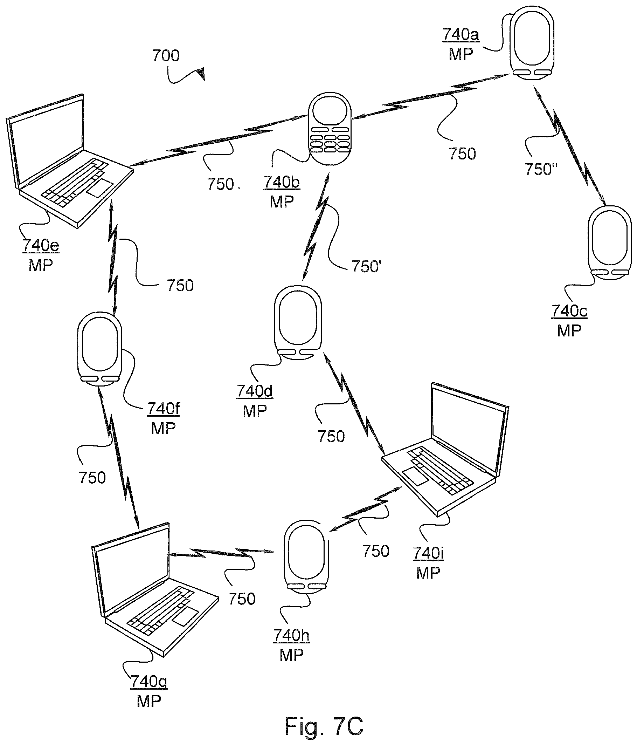

Figure 6 shows a flowchart of a general method according to the teachings herein for use in a mesh point (such as the network devices 100, 200, 330, 340 and 400 of figures 1, 2, 3 and 4) for ensuring that connections between all network devices are kept intact to avoid long delays or dropped communication channels. Figures 7A, 7B and 7C show instances of an example routing mesh network 700. In the example mesh network 700 there are 9 mesh points 740 that are connected to one another, directly or indirectly. The mesh points 740 communicate with one another by sending data communications. The data communications are either so-called beacons or data communications relating to a specific application or activity of a mesh point 740.

In the description below there will not be made any distinction between which component of a mesh point or a network device that performs which action. As would be apparent to a person skilled in data network devices some tasks may be implemented to be performed by several different components and to list all the possible alternatives would only serve to cloud the issues at hand. It should be noted that some procedures shown in figure 6 may be performed in an alternate order or are optional and may not represent the core teaching of this application.

A first network device is configured to monitor the signal strength 610 at which communications are received from other network devices. The communication received may be a beacon. This is suitable for monitoring the signal strength provided by a network device that is not otherwise communicating with the first network device. The communication may also be a data communication relating to a specific application or activity. This enables a more active monitoring of the signal strength provided by another network device that the first network device is communicating with as such data communications have a tendency of being transmitted more frequently than the beacon communications. This enables a shorter reaction time for making a soft handover as a connection is lost or is unable to maintain a high quality connection. It should be apparent that a network device may be configured to monitor both signal strengths at which beacons are received and at which data communications relating to a specific application or activity are received.

In one embodiment the signal strength is measured as a Received Signal Strength (RSS). In one embodiment adapted for use with mesh network devices adapted for communication through a radio frequency interface arranged to operate according to a mobile communications technology or radio access technology, such as W-CDMA, GSM, UTRAN, LTE, and NMT to name a few, the authors of this application has realized that the signal strength can also be measured as a Received Signal Strength Indicator (RSSI). In one embodiment the signal strength is measured as a signal to noise ratio.

The first network device is further configured to store 620 the received signal strength for each network device from which a data communication is received from. In one embodiment the signal strength is stored in a table arranged to store data for the network devices in the surrounding of the first network device. In one embodiment the table is realized through the use of a table referred to as the mesh neighbor table. In one embodiment the signal strengths provided by each network device are sorted in decreasing order to enable a faster determination of the network device that provides the highest signal strength.

The first network device is further configured to detect a change in signal strength 630. In one embodiment the first network device is configured to determine that a signal strength provided by a second network device, which is connected to the first network device, is decreasing. This allows for predicting that a connection or link is likely to be lost or turn into a low quality connection.

In an alternative embodiment the first network device is configured to determine that a signal strength provided by an alternative network device is increasing. This allows for predicting that a higher quality connection or link is likely to become available.

If a change in signal strength is detected the first network device is configured to determine 650 if the connection with the second network device should be replaced. The connection may be replaced by being terminated and establishing a new connection with an alternative network device. Alternatively, the first network device is configured to determine that the connection with the second network device should be terminated and replaced by amending the paths that are in place to the other network devices of the mesh network.

Alternatively to storing said monitored signal strengths and detecting a change the first network device is configured to determine that a received signal strength is too low to provide a high quality connection and, based on this, determine if the connection should be replaced 635. In figure 6 this alternative is indicated as an alternative by the dashed lines.

In one embodiment the first network device is configured to determine if the connection with the second network device should be replaced based on a threshold value of the signal strength provided by the second network device. In such an embodiment the first network device is configured to replace the connection with the second network device as the second network device no longer is able to provide communications at a signal strength level that is sufficient for maintaining a high quality connection any longer. In one embodiment the threshold value is represented by an absolute value. Alternatively the threshold value depends on the available received signal strengths (i.e. the threshold value is relative).

In one embodiment the first network device is configured to determine if the connection with the second network device should be replaced based on a trend of the monitored signal strengths. If, for example it is determined that a second network device is providing communications at steadily decreasing signal strengths (showing a negative trend), the first network device may be configured to preemptively determine that the connection with the second network device should be replaced before it becomes too weak to maintain a high quality connection. Alternatively and/or additionally the first network device may determine that the connection with the second network device should be replaced if it is determined that an alternative network device is providing communications at steadily increasing signal strengths (showing a positive trend), the first network device may be configured to preemptively determine that the connection with the second network device should be replaced with a connection with the alternative network device as it most likely will be able to provide a communication channel of higher quality as the signal strength increases.

In one embodiment the first network device is configured to determine if the connection with the second network device should be replaced based on a projected estimation of the monitored signal strengths.

In one embodiment the first network device is configured to determine if the connection with the second network device should be replaced as the received signal strength provided by the second network device becomes weaker than a received signal strength from another or alternative network device.

This enables the first network device to make a proactive choice of switching network device to be connected to in order to maintain a high quality connection and doing so in time to avoid loosing the connection keeping the mesh network intact.

As the first network device has determined that a connection should be replaced it replaces the connection 660.

By making a proactive determination that a connection needs or is to be replaced based on monitoring the received signal strength levels it is possible to make targeted determinations regarding the mesh network topology without having to unnecessarily flood the mesh network, randomly or uniformly, with broadcasted messages.

To enable the mesh network to operate as the connection is replaced the first network device is configured to perform a path request 640 to relevant nodes or network devices in the mesh network assuming that the connection with the second network device has been replaced. The first network device is configured to perform such a path request before determining that the connection should be replaced. This helps ensuring that a replacement of the connection will benefit the mesh network. In one embodiment the path request is performed by sending out at least one so-called PREQ message.

Alternatively or additionally the first network device is configured to perform the path request after the connection has been replaced. This allows for a connection to be established quicker.

In one embodiment the first network device is configured to make a path request for more than one alternative network device. This allows for ensuring that replacing the connection with the chosen alternative or another network device provides for a better or possibly the best network topology available.

To allow for optimizing, or at least increasing, the overall performance of the mesh network, the first network device is, in one embodiment, configured to prioritize another or alternative network device based on the properties of the another or alternative network device. For example, the first network device may be configured to prioritize a connection with an access point over a general mesh point. The reason for this is that a direct connection to an access point allows for a likely increase in bandwidth. The connection with the access point is also more likely to remain stable as the access point is not as likely to be moved as a general mesh point. Another example is to prioritize a connection with a Mesh Point Portal. A direct connection to a MPP most likely allows for faster reception of streamed data for example.

The first network device may also be configured to prioritize based on properties of a resulting topology. One aspect of a topology is the path lengths between two network devices. Another aspect is the bandwidth of a path between two network devices. The first network device may thus be configured to prioritize short paths provided by a connection with one alternative network device over a higher signal strength provided by a second alternative network device. This allows for a better network topology in which data does not need to be relayed as much, saving both bandwidth and power. In such an embodiment the first network device is configured to make such a prioritization only when the signal strength of the first alternative or another network device is high enough to provide a high quality connection. The first network device may be configured to determine that the first alternative network device will be able to provide a high enough signal strength based on a relative values of the signal strengths. For example, should the signal strength provided by first alternative network device be say 90 % of the signal strength provided by the second alternative or another network device, the first network device may be configured to prioritize the shorter path lengths and the better topology.

In one alternative embodiment the network device may be configured to determine that a prioritization of the alternative or other network device is only to be performed if the provided signal strength is above a threshold value.

To help ensure that a network device is not rendered without a connection and to ensure that the mesh network is kept intact the first network device is configured to signal to the second network device that the connection 670 will be replaced. This allows the second network device to take preemptive measures to ensure that a new connection will be established so that connection to the network is not lost, if possible.

To further help ensure that the mesh network is kept intact the first network device is configured to replace the connection as it receives a confirmation from the second network device that the connection can be replaced. In one embodiment the first network device is configured to allow a time period to pass before replacing the connection, if it is determined that the connection is to be replaced, irrespective of any signaling from the second network device. This ensures that the first network device remains connected to the mesh network even if the second network device is unable to remain connected.

Figures 7A, 7B and 7C show an example of a routing mesh network 700 arranged to operate according to herein. The mesh network 700 comprises 9 network devices 740a-i each connected to at least one other network device 740a-i. In the example of figures 7A, 7B and 7C all network devices 740 are referenced as being Mesh Points (MP) and no difference is made between Mesh Points, Mesh Access Points and Mesh Point Portals.

In figure 7A a network device 740c is connected through wireless connections 750 to two network devices 740b and 740d. In this example the network device 740c is moving in a direction away from the two network devices 740b and 740d as indicated by the dashed arrow in figure 7A.

In the following example the description will focus on the actions performed by the network device referenced 740b which in this example will be referred to as a first network device 740b and the moving network device 740c will be referred to as a second network device 740c.

The first network device 740b monitors the signal strength that communications from the second network device 740c is received at. As mentioned above the communications received may be beacons sent from the second network device 740c. The communications received may also or alternatively be data communications received as part of the data communications, such as a voice call, that are being conducted in the mesh network 700.

The first network device 740b is also connected through wireless connections or links 750 to two other network devices 740a and 740e. The first network device 740b also monitors the communications received from the other network devices 740a, 740e.

In this example the first network device 740b is also within range of a network device 740d which is an alternative for establishing a connection with and which will be referred to as an alternative network device 740d. It should be noted that the first network device 740b may also be within range of other alternative network devices (such as network device 740f), but the description of this example will focus on one alternative network device referenced 740d.

The first network device 740b is configured to monitor the signal strength at which beacons from the alternative network device 740d are received.

The first network device 740b is furthermore configured to compare the signal strength received from the second node to signal strength received from other nodes 740e and 740a and alternative network devices 740d. As the second network device 740c moves away the signal strength at which communications are received will decrease. The first network device 740b compares the signal strength received from the second network device 740c with the signal strengths received from the other network devices 740a, 740e and the alternative network device 740d to determine which network device 740c, 740a, 740e and 740d has the highest signal strength.

In one instance of this example the signal strength at which communications are received from the alternative network device 740d is the highest signal strength and the first network device 740b determines that the alternative network device 740d is the network device that provides communications at the highest signal strength and should thus be the best candidate to maintain a connection 750 with.

In this example the first node 740b performs a path request to the other mesh points assuming a connection 750 with the alternative network device 740d instead of a connection with the second network device and as this path request has been performed the first network device is configured to establish a connection 750 with the alternative network device 740d. As the connection with the alternative network device 740d is established the connection 750 with the second network device 740c is terminated.

In another instance of this example the alternative network device 740d may not provide the highest signal strength, but the alternative network device 740d may provide better (as in more bandwidth) or shorter paths than, for example, another network device 740e which may provide the highest signal strength. As has been disclosed in the above the first network device 740b may be configured to prioritize which network device to connect to based on other parameters than solely the signal strength.

The resulting mesh network 700 for both instances of this example is shown in figure 7B. In figure 7B the first network device 740b is now connected to the alternative network device 740d through the new connection 750'. In the example of figure 7B the connection 750 between the alternative network device 740d and the second network device 740c is also terminated. It should be noted that this is only an example to illustrate the situation where the second network device 740c provides a signal strength that is too low to maintain a high quality connection also with the alternative network device 740d. As will be described below the second network device 740c may also be configured to establish new connections thereby ensuring that the network device 740c is always connected to the mesh network 700.

It should be apparent to a skilled person that the procedure disclosed above may also and/or alternatively be performed by the alternative network device 740d, which is also connected to the second network device 740c in the starting situation shown in figure 7A.

Furthermore, it should also be apparent that the second network device 740c may also be configured to act as a first network device. As the second network device 740c moves away from the first network device 740b and the alternative network device 740d it is configured to determine that the signal strength provided from these network devices 740b, 740d decreases and by comparing with signal strengths provided by other network devices, such as the alternative network device 740a which the second network device 740c is moving closer to, the second network device 740c is able to determine that a connection should be established with the alternative network device 740a. The procedure for making this determination and establishing the resulting connection is performed according to one or several of the alternatives that have been disclosed above. The second network device 740c may perform this procedure independently to the procedure performed by the first network device 740b or after having been signaled by the first network device 740d that the connection 750 between them will be terminated. As has been disclosed above, in one embodiment no connection is terminated before both network devices 740b, 740c, 740d are made aware of the fact that the connection 750 between them will be terminated by one of them. Figure 7C shows the resulting mesh network 700 where the second network device 740c is connected to the alternative network device 740a through a new connection 750".

One benefit of the teachings herein is that a mesh network will be kept intact without long delays as the handovers will be predicted in time and proactive choices are made to save on network resources (bandwidth and power).

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A network device (100, 200, 330, 340, 400, 740) comprising a memory (240, 440), an interface (230, 430) and a controller (210, 410) for use in a mesh network comprising at least one second network device (740c) and at least one another or alternative network device (740d), wherein said network device (100, 200, 330, 340, 400, 740) is configured to be connected to said second network device (740c) through a connection (350, 750), wherein said controller (210, 410) is configured to:
receive a communication from a second network device (740c) or another or alternative network device (740d) through said interface (230, 430);
monitor a signal strength that said communication was received at; and
determine whether said connection (350, 750) is to be replaced based on said monitored signal strength and, if so, cause said connection (350, 750) to be replaced,
said determination whether said connection (350, 750) is to be replaced is a proactive determination and is made before the signal strength becomes too weak for ensuring correct signal reception and
wherein said controller (210, 410) is further configured to
perform a path request and to
replace said connection (350, 750) by terminating said connection (350, 750) and amending paths that are in place to the other network devices (740a,c-i) of the mesh network based on said path request, **characterized in that**
said controller (210, 410) is further configured to determine a resulting topology and prioritize said determination of whether said connection (350, 750) is to be replaced based on properties of said resulting topology.

2. The network device (100, 200, 330, 340, 400, 740) of claim 1, wherein said controller is further configured to prioritize a connection with an access point over a general mesh point.

3. The network device (100, 200, 330, 340, 400, 740) of claim 1 or 2, wherein said controller (210, 410) is further configured to replace said connection (350, 750) by terminating said connection (350, 750) and establishing a new connection (750', 750") with said another or alternative network device (740d).

4. The network device (100, 200, 330, 340, 400, 740) of any of claims 1 to 3, wherein said controller (210, 410) is further configured to determine that a monitored signal strength is too low to provide a high quality connection and, based on this, determine whether said connection (350, 750) should be replaced.

5. The network device (100, 200, 330, 340, 400, 740) of any of claims 1 to 4, wherein said controller (210, 410) is further configured detect a change in said monitored signal strength prior to determining whether said connection (350, 750) should be replaced.

6. The network device (100, 200, 330, 340, 400, 740) of any of claims 1 to 5, wherein said controller (210, 410) is further configured to determine whether said connection (350, 750) with said second network device (740c) should be replaced based on a threshold value of the monitored signal strength.

7. The network device (100, 200, 330, 340, 400, 740) of any of claims 1 to 5, wherein said controller (210, 410) is further configured to wherein said controller (210, 410) is further configured to:
store said monitored signal strength in said memory (240, 440);
determine a trend; and
base said determination of whether said connection (350, 750) is to be replaced on said trend.

8. The network device (100, 200, 330, 340, 400, 740) of any of claims 1 to 7, wherein said controller (210, 410) is further configured to prioritize said determination of whether said connection (350, 750) is to be replaced based on the properties of said another or alternative network device (740d).

9. The network device (100, 200, 330, 340, 400, 740) of any of claims 1 to 8, wherein said controller (210, 410) is further configured to signal to said second network device (740c) that said connection (350, 750) will be replaced.

10. The network device (100, 200, 330, 340, 400, 740) of any of claims 1 to 9, wherein said interface (230, 430) is a radio interface (230, 430).

11. The network device (100, 200, 330, 340, 400, 740) of claim 10, wherein said radio interface (230, 430) is configured to operate according to the standard IEEE 802.11s.

12. Method for use in a mesh network comprising at least one first network device (740b), at least one second network device (740c) and at least one another or alternative network device (740d), wherein said first network device is configured to be connected to said second network device (740c), said method comprising:
said first network device (740b) receiving a communication from a second network device (740c) or another or alternative network device (740d) through an interface (230, 430);
said first network device (740b) monitoring a signal strength that said communication was received at; and
said first network device (740b) determining whether said connection (350, 750) is to be replaced based on said monitored signal strength and, if so, causing said connection (350, 750) to be replaced,
said determination whether said connection (350, 750) is to be replaced is a proactive determination and is made before the signal strength becomes too weak for ensuring correct signal reception and
wherein said method further comprises
performing a path request and
replacing said connection (350, 750) by terminating said connection (350, 750) and amending paths that are in place to the other network devices (740a,c-i) of the mesh network based on said path request, **characterized in that**
said method further comprises determining a resulting topology and prioritizing said determination of whether said connection (350, 750) is to be replaced based on properties of said resulting topology.

13. A computer readable storage medium (50) encoded with instructions (51) that, when executed on a processor, performs the method according to claim 12.

## Patentansprüche

1. Netzwerkvorrichtung (100, 200, 330, 340, 400, 740), die einen Speicher (240, 440), eine Schnittstelle (230, 430) und eine Steuerung (210, 410) zur Verwendung in einem Maschennetzwerk umfasst, das mindestens eine zweite Netzwerkvorrichtung (740c) und mindestens eine weitere oder alternative Netzwerkvorrichtung (740d) umfasst, wobei die Netzwerkvorrichtung (100, 200, 330, 340, 400, 740) konfiguriert ist, mit der zweiten Netzwerkvorrichtung (740c) durch eine Verbindung (350, 750) verbunden zu werden, wobei die Steuerung (210, 410) für Folgendes konfiguriert ist:
Empfangen einer Kommunikation von einer zweiten Netzwerkvorrichtung (740c) oder einer weiteren oder alternativen Netzwerkvorrichtung (740d) über die Schnittstelle (230, 430);
Überwachen einer Signalstärke, mit der die Kommunikation empfangen wurde; und
Bestimmen, ob die Verbindung (350, 750) ersetzt werden muss, basierend auf der überwachten Signalstärke, und wenn dies der Fall ist, Veranlassen, dass die Verbindung (350, 750) ersetzt wird,
wobei es sich bei der Bestimmung, ob die Verbindung (350, 750) ersetzt werden muss, um eine proaktive Bestimmung handelt und die getroffen wird, bevor die Signalstärke zu schwach wird, um einen korrekten Signalempfang zu gewährleisten, und
wobei die Steuerung (210, 410) ferner konfiguriert ist,
eine Pfadanforderung durchzuführen und
die Verbindung (350, 750) zu ersetzten, indem die Verbindung (350, 750) getrennt wird und Pfade, die zu den weiteren Netzwerkvorrichtungen (740a,c - i) des Maschennetzwerks vorhanden sind, basierend auf der Pfadanforderung geändert werden, **dadurch gekennzeichnet, dass**
die Steuerung (210, 410) ferner konfiguriert ist, eine resultierende Topologie zu bestimmen und die Bestimmung, ob die Verbindung (350, 750) ersetzt werden muss, basierend auf Eigenschaften der resultierenden Topologie zu priorisieren.

2. Netzwerkvorrichtung (100, 200, 330, 340, 400, 740) nach Anspruch 1, wobei die Steuerung ferner konfiguriert ist, eine Verbindung mit einem Zugriffspunkt gegenüber einem allgemeinen Maschenpunkt zu priorisieren.

3. Netzwerkvorrichtung (100, 200, 330, 340, 400, 740) nach Anspruch 1 oder 2, wobei die Steuerung (210, 410) ferner konfiguriert ist, die Verbindung (350, 750) zu ersetzen, indem die Verbindung (350, 750) getrennt und eine neue Verbindung (750', 750") mit der weiteren oder alternativen Netzwerkvorrichtung (740d) eingerichtet wird.

4. Netzwerkvorrichtung (100, 200, 330, 340, 400, 740) nach einem der Ansprüche 1 bis 3, wobei die Steuerung (210, 410) ferner konfiguriert ist, zu bestimmen, dass eine überwachte Signalstärke zu gering ist, um eine hochwertige Verbindung bereitzustellen, und darauf basierend zu bestimmen, ob die Verbindung (350, 750) ersetzt werden sollte.

5. Netzwerkvorrichtung (100, 200, 330, 340, 400, 740) nach einem der Ansprüche 1 bis 4, wobei die Steuerung (210, 410) ferner konfiguriert ist, eine Änderung der Signalstärke zu erkennen, bevor bestimmt wird, ob die Verbindung (350, 750) ersetzt werden sollte.

6. Netzwerkvorrichtung (100, 200, 330, 340, 400, 740) nach einem der Ansprüche 1 bis 5, wobei die Steuerung (210, 410) ferner konfiguriert ist, basierend auf einem Schwellenwert der überwachten Signalstärke zu bestimmen, ob die Verbindung (350, 750) mit der zweiten Netzwerkvorrichtung (740c) ersetzt werden sollte.

7. Netzwerkvorrichtung (100, 200, 330, 340, 400, 740) nach einem der Ansprüche 1 bis 5, wobei die Steuerung (210, 410) ferner für Folgendes konfiguriert ist:
Speichern der überwachten Signalstärke in dem Speicher (240, 440);
Bestimmen einer Tendenz; und
Basieren der Bestimmung, ob die Verbindung (350, 750) ersetzt werden muss, auf diese Tendenz.

8. Netzwerkvorrichtung (100, 200, 330, 340, 400, 740) nach einem der Ansprüche 1 bis 7, wobei die Steuerung (210, 410) ferner konfiguriert ist, die Bestimmung, ob die Verbindung (350, 750) ersetzt werden muss, basierend auf den Eigenschaften der weiteren oder alternativen Netzwerkvorrichtung (740d) zu priorisieren.

9. Netzwerkvorrichtung (100, 200, 330, 340, 400, 740) nach einem der Ansprüche 1 bis 8, wobei die Steuerung (210, 410) ferner konfiguriert ist, der zweiten Netzwerkvorrichtung (740c) zu signalisieren, dass die Verbindung (350, 750) ersetzt werden wird.

10. Netzwerkvorrichtung (100, 200, 330, 340, 400, 740) nach einem der Ansprüche 1 bis 9, wobei es sich bei der Schnittstelle (230, 430) um eine Funkschnittstelle (230, 430) handelt.

11. Netzwerkvorrichtung (100, 200, 330, 340, 400, 740) nach Anspruch 10, wobei die Funkschnittstelle (230, 430) konfiguriert ist, gemäß dem Standard IEEE 802.11s betrieben zu werden.

12. Verfahren zur Verwendung in einem Maschennetzwerk, das mindestens eine erste Netzwerkvorrichtung (740b), mindestens eine zweite Netzwerkvorrichtung (740c) und mindestens eine weitere oder alternative Netzwerkvorrichtung (740d) umfasst, wobei die erste Netzwerkvorrichtung konfiguriert ist, mit der zweiten Netzwerkvorrichtung (740c) verbunden zu werden, wobei das Verfahren Folgendes umfasst:
Empfangen einer Kommunikation von einer zweiten Netzwerkvorrichtung (740c) oder einer weiteren oder alternativen Netzwerkvorrichtung (740d) durch die erste Netzwerkvorrichtung (740b) über eine Schnittstelle (230, 430);
Überwachen einer Signalstärke, mit der die Kommunikation empfangen wurde, durch die erste Netzwerkvorrichtung (740b); und
Bestimmen durch die erste Netzwerkvorrichtung (740b), ob die Verbindung (350, 750) ersetzt werden muss, basierend auf der überwachten Signalstärke, und wenn dies der Fall ist, Veranlassen, dass die Verbindung (350, 750) ersetzt wird,
wobei es sich bei der Bestimmung, ob die Verbindung (350, 750) ersetzt werden muss, um eine proaktive Bestimmung handelt und die getroffen wird, bevor die Signalstärke zu schwach wird, um einen korrekten Signalempfang zu gewährleisten, und
wobei das Verfahren ferner Folgendes umfasst:
Durchführen einer Pfadanforderung und
Ersetzen der Verbindung (350, 750), indem die Verbindung (350, 750) getrennt wird und Pfade, die zu den weiteren Netzwerkvorrichtungen (740a,c - i) des Maschennetzwerks vorhanden sind, basierend auf der Pfadanforderung geändert werden, **dadurch gekennzeichnet, dass**
das Verfahren ferner das Bestimmen einer resultierenden Topologie und das Priorisieren der Bestimmung, ob die Verbindung (350, 750) ersetzt werden muss, basierend auf Eigenschaften der resultierenden Topologie, umfasst.

13. Computerlesbares Speichermedium (50), das mit Anweisungen (51) codiert ist, die bei Ausführung auf einem Prozessor das Verfahren nach Anspruch 12 durchführen.

## Revendications

1. Dispositif de réseau (100, 200, 330, 340, 400, 740) comprenant une mémoire (240, 440), une interface (230, 430) et un dispositif de commande (210, 410) pour une utilisation dans un réseau maillé comprenant au moins un second dispositif de réseau (740c) et au moins un dispositif de réseau supplémentaire ou alternatif (740d), dans lequel ledit dispositif de réseau (100, 200, 330, 340, 400, 740) est configuré pour être connecté audit second dispositif de réseau (740c) à travers une connexion (350, 750), dans lequel ledit dispositif de commande (210, 410) est configuré pour :
recevoir une communication en provenance d'un second dispositif de réseau (740c) ou d'un dispositif de réseau supplémentaire ou alternatif (740d) à travers ladite interface (230, 430) ;
surveiller une intensité du signal à laquelle la communication a été reçue ; et
déterminer si ladite connexion (350, 750) doit être remplacée sur la base de ladite intensité du signal surveillée et, si tel est le cas, amener ladite connexion (350, 750) à être remplacée,
ladite opération consistant à déterminer si ladite connexion (350, 750) doit être remplacée est une détermination proactive et est effectuée avant que l'intensité du signal ne devienne trop faible pour assurer une réception correcte du signal et
dans lequel ledit dispositif de commande (210, 410) est en outre configuré pour
réaliser une demande de trajet et pour
remplacer ladite connexion (350, 750) en mettant fin à ladite connexion (350, 750) et en modifiant les trajets qui sont en place vers les autres dispositifs de réseau (740a,c-i) du réseau maillé sur la base de ladite demande de trajet, **caractérisé en ce que**
ledit dispositif de commande (210, 410) est en outre configuré pour déterminer une topologie résultante et hiérarchiser ladite opération consistant à déterminer si ladite connexion (350, 750) doit être remplacée sur la base des propriétés de ladite topologie résultante.

2. Dispositif de réseau (100, 200, 330, 340, 400, 740) selon la revendication 1, dans lequel ledit dispositif de commande est en outre configuré pour privilégier une connexion avec un point d'accès par rapport à un point de maillage général.

3. Dispositif de réseau (100, 200, 330, 340, 400, 740) selon la revendication 1 ou 2, dans lequel ledit dispositif de commande (210, 410) est en outre configuré pour remplacer ladite connexion (350, 750) en mettant fin à ladite connexion (350, 750) et en établissant une nouvelle connexion (750', 750") avec ledit dispositif de réseau supplémentaire ou alternatif (740d) .

4. Dispositif de réseau (100, 200, 330, 340, 400, 740) selon l'une quelconque des revendications 1 à 3, dans lequel ledit dispositif de commande (210, 410) est en outre configuré pour déterminer qu'une intensité du signal surveillée est trop faible pour fournir une connexion de haute qualité et, sur la base de ceci, déterminer s'il convient de remplacer ladite connexion (350, 750).

5. Dispositif de réseau (100, 200, 330, 340, 400, 740) selon l'une quelconque des revendications 1 à 4, dans lequel ledit dispositif de commande (210, 410) est en outre configuré pour détecter un changement de ladite intensité du signal surveillée avant de déterminer s'il convient de remplacer ladite connexion (350, 750).

6. Dispositif de réseau (100, 200, 330, 340, 400, 740) selon l'une quelconque des revendications 1 à 5, dans lequel ledit dispositif de commande (210, 410) est en outre configuré pour déterminer s'il convient de remplacer ladite connexion (350, 750) par ledit second dispositif de réseau (740c) sur la base d'une valeur seuil de l'intensité du signal surveillée.

7. Dispositif de réseau (100, 200, 330, 340, 400, 740) selon l'une quelconque des revendications 1 à 5, dans lequel ledit dispositif de commande (210, 410) est en outre configuré pour dans lequel ledit dispositif de commande (210, 410) est en outre configuré pour :
stocker ladite intensité du signal surveillée dans ladite mémoire (240, 440) ;
déterminer une tendance ; et
baser ladite opération consistant à déterminer si ladite connexion (350, 750) doit être remplacée sur ladite tendance.

8. Dispositif de réseau (100, 200, 330, 340, 400, 740) selon l'une quelconque des revendications 1 à 7, dans lequel ledit dispositif de commande (210, 410) est en outre configuré pour hiérarchiser ladite opération consistant à déterminer si ladite connexion (350, 750) doit être remplacée sur la base des propriétés dudit dispositif de réseau supplémentaire ou alternatif (740d) .

9. Dispositif de réseau (100, 200, 330, 340, 400, 740) selon l'une quelconque des revendications 1 à 8, dans lequel ledit dispositif de commande (210, 410) est en outre configuré pour signaler audit second dispositif de réseau (740c) que ladite connexion (350, 750) sera remplacée.

10. Dispositif de réseau (100, 200, 330, 340, 400, 740) selon l'une quelconque des revendications 1 à 9, dans lequel ladite interface (230, 430) est une interface radio (230, 430).

11. Dispositif de réseau (100, 200, 330, 340, 400, 740) selon la revendication 10, dans lequel ladite interface radio (230, 430) est configurée pour fonctionner selon la norme IEEE 802.11s.

12. Procédé pour une utilisation dans un réseau maillé comprenant au moins un premier dispositif de réseau (740b), au moins un second dispositif de réseau (740c) et au moins un dispositif de réseau supplémentaire ou alternatif (740d), dans lequel ledit premier dispositif de réseau est configuré pour être connecté audit second dispositif de réseau (740c), ledit procédé comprenant :
ledit premier dispositif de réseau (740b) recevant une communication en provenance d'un second dispositif de réseau (740c) ou d'un dispositif de réseau supplémentaire ou alternatif (740d) à travers une interface (230, 430) ;
ledit premier dispositif de réseau (740b) surveillant une intensité du signal à laquelle la communication a été reçue ; et
ledit premier dispositif de réseau (740b) déterminant si ladite connexion (350, 750) doit être remplacée sur la base de ladite intensité du signal surveillée et, si tel est le cas, amenant ladite connexion (350, 750) à être remplacé,
ladite opération consistant à déterminer si ladite connexion (350, 750) doit être remplacée est une détermination proactive et est effectuée avant que l'intensité du signal ne devienne trop faible pour assurer une réception correcte du signal et
dans lequel ledit procédé comprend en outre
la réalisation d'une demande de trajet et
le remplacement de ladite connexion (350, 750) en mettant fin à ladite connexion (350, 750) et en modifiant les trajets qui sont en place vers les autres dispositifs de réseau (740a,c-i) du réseau maillé sur la base de ladite demande de trajet, **caractérisé en ce que**
ledit procédé comprend en outre la détermination d'une topologie résultante et la hiérarchisation de ladite opération consistant à déterminer si ladite connexion (350, 750) doit être remplacée sur la base des propriétés de ladite topologie résultante.

13. Support de stockage lisible par ordinateur (50) codé avec des instructions (51) qui, lorsqu'elles sont exécutées sur un processeur, réalise le procédé selon la revendication 12.
